# EUROPEAN PATENT SPECIFICATION

(11) **EP 4 420 401 B1**
(45) Date of publication and mention of the grant of the patent: **25.11.2026**
(21) Application number: 21961019.3
(22) Date of filing: 22.10.2021
(51) Int. Cl.: H04W 36/00

(54) **REALLOCATION OF UNMANNED AIRCRAFT SYSTEM SERVICE SUPPLIER**
NEUZUORDNUNG EINES DIENSTANBIETERS EINES UNBEMANNTEN FLUGZEUGSYSTEMS
RÉATTRIBUTION DE FOURNISSEUR DE SERVICES DE SYSTÈME D'AÉRONEF SANS PILOTE

(43) Date of publication of application: 28.08.2024
(60) Divisional application: 25212749.3 / 4 664 993
(73) Proprietor: QUALCOMM INCORPORATED, San Diego, California 92121-1714 (US)
(72) Inventor: ZHANG, Kefeng, San Diego, California 92121-1714 (US); FACCIN, Stefano, San Diego, California 92121-1714 (US); VAN DUREN, Drew Foster, San Diego, California 92121-1714 (US); ZISIMOPOULOS, Haris, San Diego, 92121-1714 (US); CAO, Yiqing, San Diego, California 92121-1714 (US); LI, Yan, San Diego, California 92121-1714 (US); DU, Zhimin, San Diego, California 92121-1714 (US); GAO, Lu, San Diego, California 92121-1714 (US)
(74) Representative: Bardehle Pagenberg Partnerschaft mbB Patentanwälte Rechtsanwälte
(86) International application number: PCT/CN2021/125503
(87) International publication number: WO 2023/065270

(56) References cited:
- WO-A1-2018/226661
- WO-A1-2019/148188
- HUAWEI ET AL: "Clarification on policies and rules used for UAV Presence Monitoring", vol. SA WG2, no. e-meeting; 20210816 - 20210827, 10 August 2021 (2021-08-10), XP052055562, Retrieved from the Internet <URL:https://ftp.3gpp.org/tsg_sa/WG2_Arch/TSGS2_146E_Electronic_2021-08/Docs/S2-2105673.zip S2-2105673 -23.256 Clarification on policy and rules for UAV Presence Monitoring.docx> [retrieved on 20210810]
- TENCENT: "Pseudo-CR on key issue x: UTM/USS service handoff", vol. SA WG6, no. e-meeting; 20200720 - 20200731, 15 July 2020 (2020-07-15), XP051908810, Retrieved from the Internet <URL:https://ftp.3gpp.org/tsg_sa/WG6_MissionCritical/TSGS6_038-e/Docs/S6-201040.zip S6-201040.docx> [retrieved on 20200715]
- TENCENT: "Pseudo-CR on key issue x: UTM/USS service handoff", 3GPP TSG-SA WG6 MEETING #38-E, S6-201040, 15 July 2020 (2020-07-15), XP051908810
- "3rd Generation Partnership Project; Technical Specification Group Services and System Aspects; Support of Uncrewed Aerial Systems (UAS) connectivity, identification and tracking; Stage 2 (Release 17)", 3GPP TS 23.256, no. V17.0.0, 24 September 2021 (2021-09-24), pages 1 - 47, XP052056715

## Description

### FIELD OF THE DISCLOSURE

Aspects of the present disclosure generally relate to wireless communication and to techniques and apparatuses for reallocation of unmanned aircraft system service supplier (USS).

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful. The wireless standards have also become relevant for unmanned aircraft systems as for example described in 3GPP S2-2105673 or 3GPP S6-201040.

### SUMMARY

Some aspects described herein relate to a method of communication performed by an unmanned aircraft system service supplier (USS). The method may include receiving a first notification indicating that a user equipment (UE) is moving out of an area associated with the USS. The method may include determining a target USS based at least in part on the first notification. The method may include transmitting, to an unmanned aircraft system network function (UAS-NF), a second notification, wherein the second notification indicates that the UE is reallocated to the target USS.

The invention is defined by the claims. Embodiments and aspects that do not fall within the scope of the claims are merely examples used for explanation of the invention. Wording such as "may" and "for example" used in the description in conjunction with features of the independent claims should not be interpreted to mean that those features are merely optional.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of a UE within a communication network, in accordance with the present disclosure.
Figs. 4 and 5 are diagrams illustrating examples associated with reallocation of an unmanned aircraft system service supplier (USS) serving an unmanned aircraft system (UAS) during a flight mission, in accordance with the present disclosure.
Figs. 6 and 7 are diagrams illustrating example processes associated with reallocation of a USS serving a UAS during a flight mission, in accordance with the present disclosure.
Figs. 8 and 9 are diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

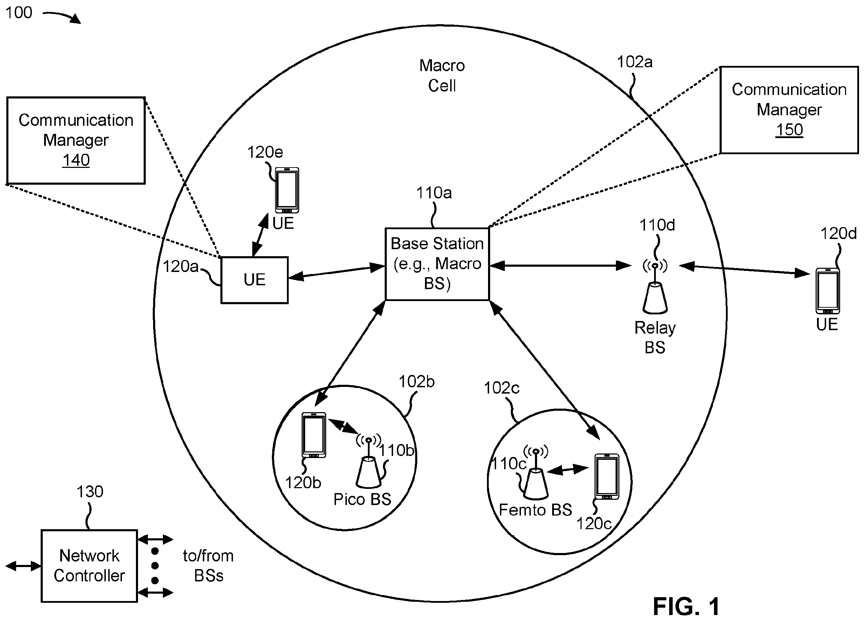

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the base station 110 may include a communication manager 150. As described in more detail elsewhere herein, the communication manager 150 may perform one or more operations associated with reallocation of a USS serving a UAS during a flight mission. Additionally, or alternatively, the communication manager 150 may perform one or more other operations described herein.

As indicated above, Fig. 1 is provided as an example. Other examples may differ from what is described with regard to Fig. 1.

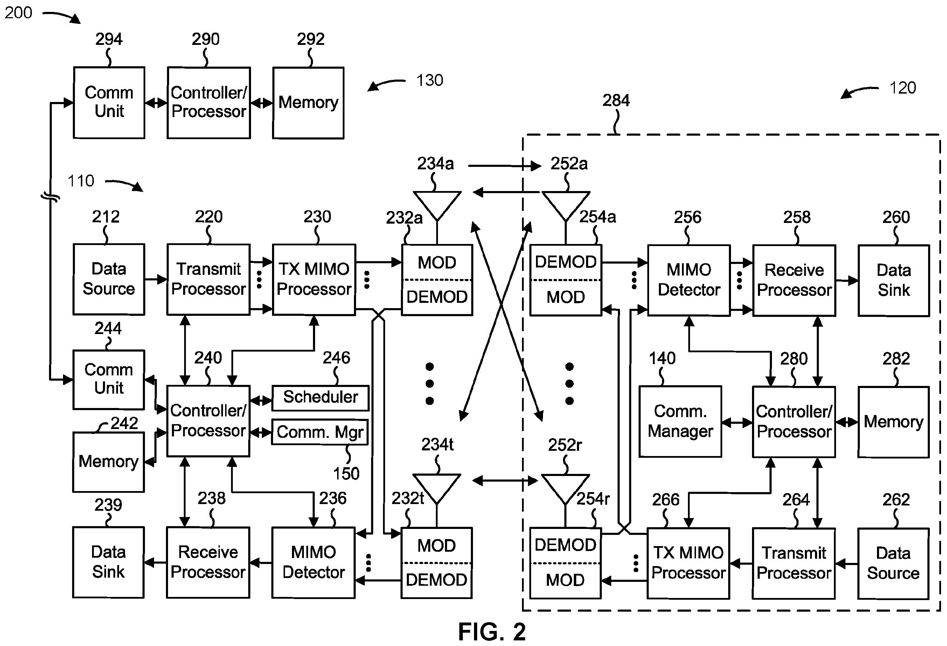

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., R modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

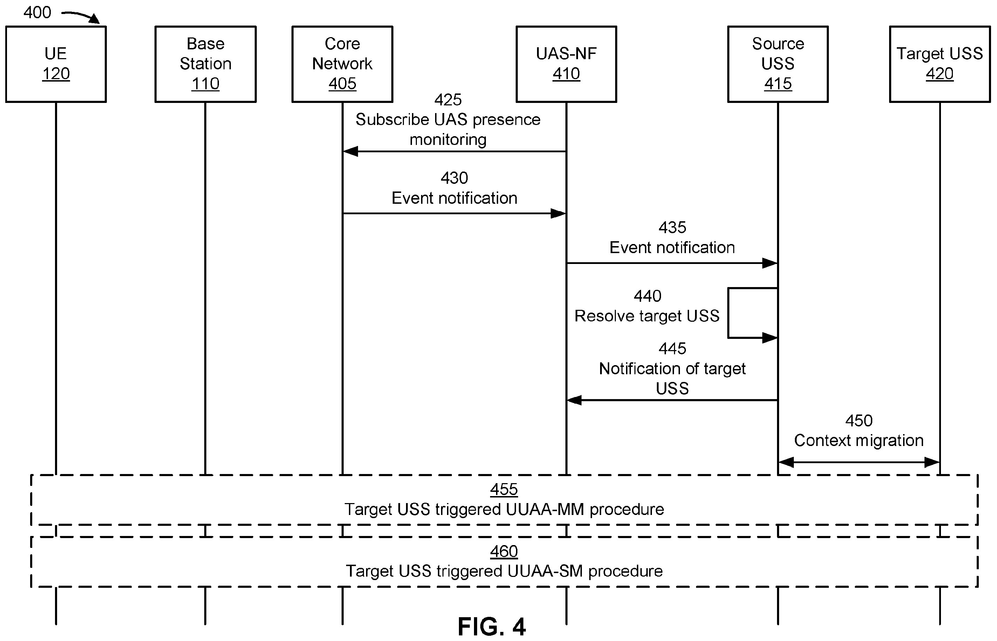

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 4-9).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 4-9).

The controller/processor 240 of the base station 110, the controller/processor 280 of the UE 120, and/or any other component(s) of Fig. 2 may perform one or more techniques associated with reallocation of a USS serving a UAS during a flight mission, as described in more detail elsewhere herein. In some aspects, the UAS network function (UAS-NF) and/or the USS described herein is the base station 110, is included in the base station 110, or includes one or more components of the base station 110 shown in Fig. 2. In some aspects, the UAS described herein is the UE 120, is included in the UE 120, or includes one or more components of the UE 120 shown in Fig. 2.

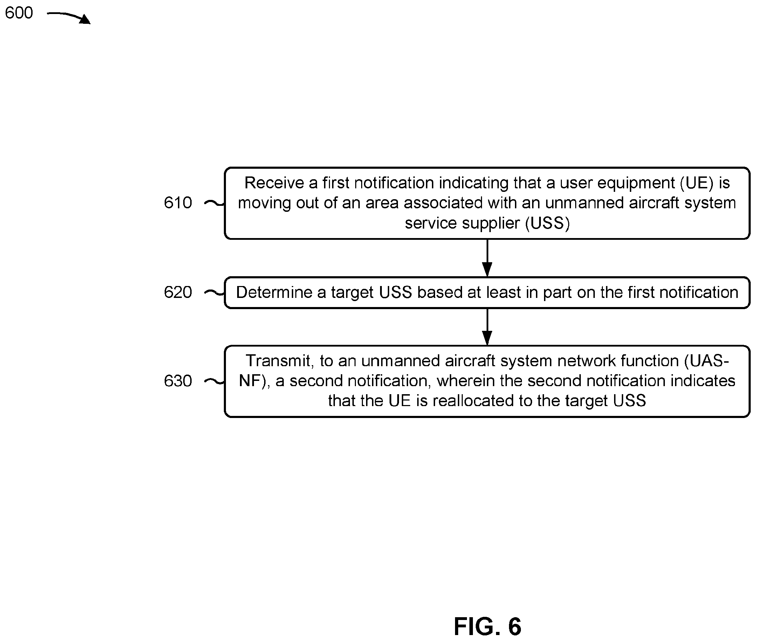

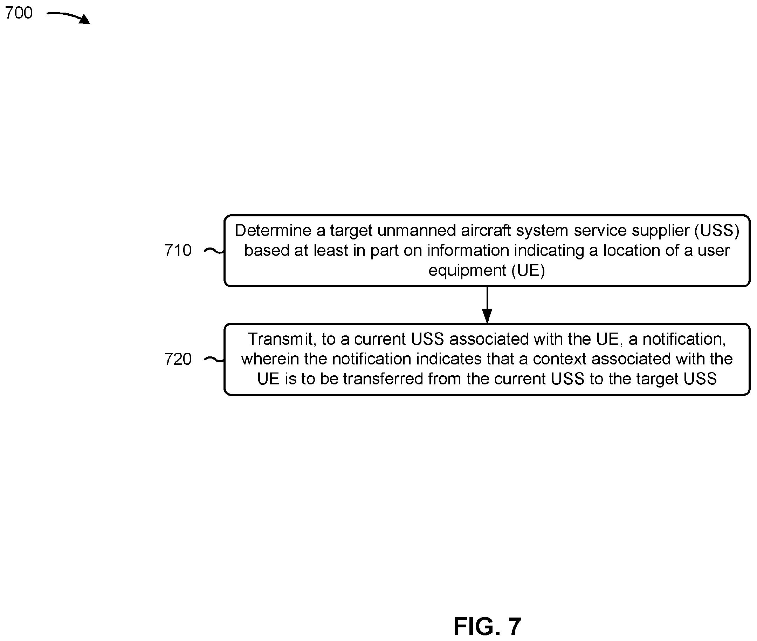

For example, the controller/processor 240 of the base station 110, the controller/processor 280 of the UE 120, and/or any other component(s) of Fig. 2 may perform or direct operations of, for example, process 600 of Fig. 6, process 700 of Fig. 7, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 600 of Fig. 6, process 700 of Fig. 7, and/or other processes as described herein. In some examples, executing instructions may include running the instructions, converting the instructions, compiling the instructions, and/or interpreting the instructions, among other examples.

In some aspects, the USS includes means for receiving a first notification indicating that a UE is moving out of an area associated with the USS; means for determining a target USS based at least in part on the first notification; and/or means for transmitting, to a UAS-NF, a second notification, wherein the second notification indicates that the UE is reallocated to the target USS. In some aspects, the means for the USS to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246.

In some aspects, the UAS-NF includes means for determining a target USS based at least in part on information indicating a location of a UE; and/or means for transmitting, to a current USS associated with the UE, a notification, wherein the notification indicates that a context associated with the UE is to be transferred from the current USS to the target USS. In some aspects, the means for the UAS-NF to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

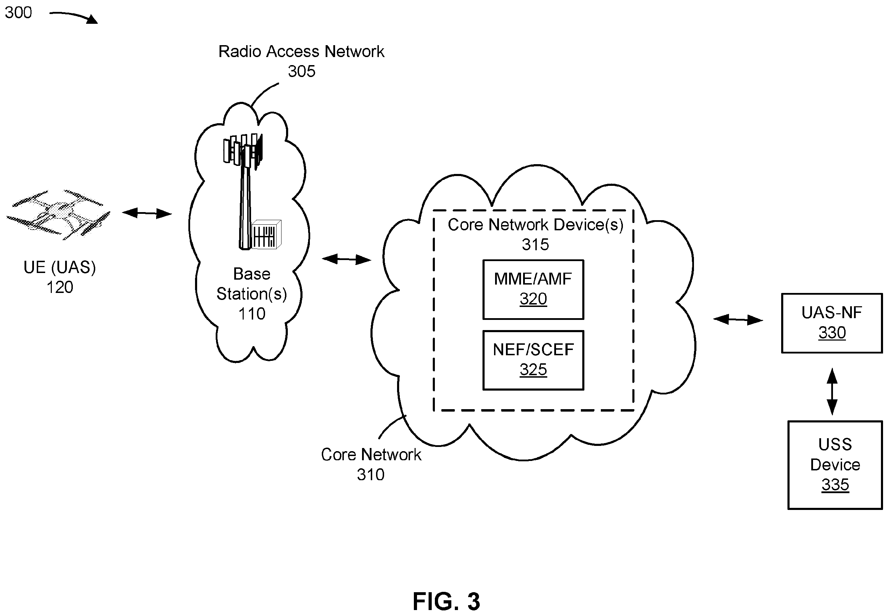

Fig. 3 is a diagram illustrating an example of UEs within a communication network environment 300, in accordance with the present disclosure. As shown in Fig. 3, the communication network environment 300 can include a UE 120 (e.g., a UAS 120, as shown), a radio access network (RAN) 305, a core network 310, a UAS-NF 330, and a USS device 335. Devices of environment 300 can interconnect via wired connections, wireless connections, or a combination of wired and wireless connections.

The UE 120 may include an aircraft without a human pilot aboard and can also be referred to as an uncrewed aerial system, an unmanned aerial vehicle (UAV), an unmanned aircraft (UA), a drone, a remotely piloted vehicle (RPV), a remotely piloted aircraft (RPA), or a remotely operated aircraft (ROA). The UE 120 may have a variety of shapes, sizes, configurations, or characteristics for a variety of purposes and applications. In some cases, the UE 120 can include one or more sensors, such as, for example, an electromagnetic spectrum sensor (e.g., a visual spectrum, infrared, or near infrared camera, or a radar system, among other examples), a biological sensor, a temperature sensor, or a chemical sensor. The UE 120 may transmit information to or may receive information from the USS device 335 (e.g., sensor data obtained by the one or more sensors of the UAS 120). Such information can be communicated directly (e.g., via a radio resource control (RRC) signal), via the base stations 110 on the RAN 305, or via the UAS-NF 330.

The core network 310 may include a network that enables communications between the RAN 305 (e.g., the base stations 110) and one or more devices and/or networks connected to the core network 310. The core network 310 may include one or more core network devices 315, such as one or more mobility management entities (MMEs) and/or access and mobility management functions (AMFs) (herein after referred to as a "MME/AMF") 320, one or more network exposure functions (NEFs) and/or service capability exposure function (SCEFs) (herein after referred to as a "NEF/SCEF") 325, and/or other entities and/or functions that provide mobility functions for the UE 120 and enable the UE 120 to communicate with other devices of the environment 300.

The MME/AMF 320 may include one or more network devices, such as one or more server devices, capable of managing authentication, activation, deactivation, and/or mobility functions associated with the UE 120 connected to the core network 310. In some cases, the MME/AMF 320 may perform operations relating to authentication of the UE 120. The MME/AMF 320 may perform operations associated with handing off the UE 120 from a first base station 110 to a second base station 110 when the UE 120 is transitioning from a first cell associated with the first base station 110 to a second cell associated with the second base station 110. In some cases, the MME/AMF 320 may select another MME and/or AMF (not shown), to which the UE 120 should be handed off (e.g., when the UE 120 moves out of range of the MME/AMF 320). In some cases, the MME/AMF 320 may communicate with the UE 120 (e.g., via the base station 110) to obtain information concerning a location of the UE 120 and/or a reachability of the UE 120 and may send the information to the NEF/SCEF 325.

The NEF/SCEF 325 may include one or more network exposure devices, such as one or more server devices, capable of exposing capabilities, events, or information, among other examples, in one or more wireless networks to help other devices in the one or more wireless networks discover network services and/or utilize network resources efficiently. In some cases, the NEF/SCEF 325 may include a NEF associated with a 5G network and/or a SCEF associated with an LTE network that receives traffic from and/or sends traffic to the UE 120 via the MME/AMF 320 and the base station 110, and that receives traffic from and/or sends traffic to the USS device 335 via the UAS-NF 330. In some cases, the NEF/SCEF 325 may include the UAS-NF 330.

The UAS-NF 330 may include one or more devices capable of receiving, storing, processing, and/or providing information associated with the UE 120. For example, the UAS-NF 330 may include a network device, a server device, a desktop computer, a laptop computer, or a similar device. In some cases, the UAS-NF 330 may be included in a data center, a cloud computing environment, or a server farm, among other examples. While shown in Fig., 3 as being external from the core network 310, in some cases, the UAS-NF 330 may reside at least partially within the core network 310.

The USS device 335 may include one or more devices capable of receiving, storing, processing, and/or providing information associated with the UE 120. For example, the USS device 335 can include a network device, a server device, a desktop computer, a laptop computer, a tablet computer, a mobile phone, or a similar device.

Typically, a single USS device 335 may be allocated to serve a UE 120 during a flight mission. For example, a flight mission of the UE 120 may include the UE 120 traveling within a geographic area or performing a function (e.g., obtaining data using one or more sensors of the UE 120) associated with a type of service (e.g., a weather service or a mapping service, among other examples). A USS device 335 associated with the geographic area or the type of service may be allocated to service the UE 120 during the flight mission.

In some cases, the UE 120 may include a UAS having a beyond visual line of sight (BVLOS) capability that enables the UE 120 to travel in a large geographic area which may include geographic areas associated with multiple USS devices 335 (e.g., multiple USSs). Similarly, the UE 120 may be equipped with multiple types of sensors that enable the UE 120 to perform functions associated with multiple types of services associated with multiple USS devices 335 (e.g., multiple USSs). In these cases, a new USS device 335 may need to be reallocated to the UE 120 for flight management of the UE 120.

Some techniques and apparatuses described herein enable reallocation of the USS (e.g., the USS device 335) serving a UAS during a flight mission. By enabling the reallocation of the USS, the flight of the UAS may be managed by multiple different USSs during a single flight mission, which may enable the UAS to travel across the boundary of two USS geographic areas or dynamically access different USSs for performing functions associated with different types of services.

As indicated above, Fig. 3 is provided as an example. Other examples may differ from what is described with respect to Fig. 3.

Fig. 4 is a diagram illustrating an example 400 associated with reallocation of a USS serving a UAS during a flight mission, in accordance with the present disclosure. As shown in Fig. 4, example 400 includes communication between a UE 120, a base station 110, a core network 405, a UAS-NF 410, a source USS 415, and a target USS 420. In some aspects, the UE 120, the base station 110, the UAS-NF 410, the source USS 415, and the target USS 420 may be included in one or more wired or wireless networks.

In some aspects, the UE 120 may comprise a UAS. The UE 120 may be operating in a geographic area associated with the source USS 415 and/or performing a function associated with a service associated with the source USS 415. In some aspects, the UE 120 may communicate with the source USS 415 via the base station 110 and/or the core network 405.

The core network 405 may include a network that enables communications between a RAN (e.g., the base station 110) and one or more devices and/or networks connected to the core network 405. For example, the core network 405 may include an evolved packet core (EPC). The core network 405 may include one or more core network devices, such as one or more MME/AMFs, one or more NEF/SCEFs, one or more session management functions (SMFs), one or more policy control functions (PCFs), one or more unified data management function (UDMs), one or more unified data repository functions (UDRs), and/or other entities and/or functions that provide mobility functions for the UAS UE 120 and enable the UAS UE 120 to communicate with other devices included in the one or more wired or wireless networks associated with the core network 405.

In some aspects, the MME/AMF may include one or more network devices, such as one or more server devices, capable of managing authentication, activation, deactivation, and/or mobility functions associated with the UE 120 connected to the core network 405. In some aspects, the MME/AMF may perform operations relating to authentication of the UE 120. The MME/AMF may maintain a non-access stratum (NAS) signaling connection with the UE 120. The MME/AMF may manage a registration procedure of the UE 120 with the RAN and/or the core network 405. The MME/AMF may perform operations associated with handing off the UE 120 from a first base station 110 to a second base station 110 when the UE 120 is transitioning from a first cell associated with the first base station 110 to a second cell associated with the second base station 110. Additionally, or alternatively, the MME/AMF may select another MME and/or AMF, to which the UE 120 is to be handed off (e.g., when the UE 120 moves out of range of the MME/AMF). In some aspects, the MME/AMF may communicate with the UE 120 (e.g., via the base station 110) to obtain information concerning a location of the UE 120 and/or a reachability of the UE 120 and may send the information to the NEF/SCEF.

In some aspects, the NEF/SCEF includes one or more network exposure devices, such as one or more server devices, capable of exposing capabilities, events, or information in one or more wireless networks to help other devices in the one or more wireless networks discover network services and/or utilize network resources efficiently. In some aspects, the NEF/SCEF may include an NEF associated with a 5G network and/or an SCEF associated with an LTE network that receives traffic from and/or sends traffic to the UE 120 via the MME/AMF and the base station 110, and that receives traffic from and/or sends traffic to a current USS device (e.g., source USS 415).

In some aspects, the PCF includes one or more network devices, such as one or more server devices, capable of managing traffic to and from the UE 120 through the RAN and enforcing a quality of service (QoS) on the RAN. In some aspects, the PCF may implement charging rules and flow control rules, manage traffic priority, or manage a QoS for the UE 120. In some aspects, the PCF may create policy information associated with the UE 120 that includes an application level UAS identifier (assigned by the source USS 415), a network level UAV identifier (assigned by the core network 405), or information associated with the source USS 415. The MME/AMF may use the policy information when performing an authentication and authorization procedure with the UE 120.

In some aspects, the UDM may store subscription information and profiles associated with one or more UEs 120. The UDM may be used for fixed access or mobile access in the core network 405. For example, the UDM may make relevant data available to one or more other functions of the core network devices, such as the MME/AMF or the SMF. The UDR may store structured data for exposure to network functions performed by the core network devices.

One or more of the core network devices may correspond to the network controller 130, as described above in connection with Fig. 1. In some aspects, the source USS 415 may communicate with the core network 405 via the UAS-NF 410. The UAS-NF 410 may enable the source USS 415 to provide information to the core network 405. For example, the source USS 415 may provide, via the UAS-NF 410, registration information associated with a registration between the UE 120 and the source USS 415. The UAS-NF 410 may be external from the core network 405 or may reside at least partially within the core network 405. In some aspects, the UAS-NF 410 may be co-located with the NEF/SCEF.

In some aspects, the UE 120 may be associated with an aerial subscription that is stored and maintained by the core network 405. The aerial subscription may be a subscription for aerial services provided by the core network 405. The core network 405 may assign a network level UAS identifier to an aerial subscription (e.g., using an aviation-level mechanism to ensure global-uniqueness of the network level UAS identifier, such as by including a mobile country code (MCC) and/or a mobile network code (MNC) in the network level UAS identifier). In some aspects, the network level UAS identifier may be a general public subscription identifier (GPSI). The network level UAS identifier of an aerial subscription (e.g., that is associated with the UE 120) may be communicated to the source USS 415 and/or the UAS-NF 410.

In some aspects, to provide aerial services to the UE 120, the core network 405 may perform a UAS UAV authentication and authorization (UUAA) procedure to authenticate the UE 120. The UUAA procedure may be defined and/or required by a regulatory body that governs aviation operation within a jurisdiction (e.g., a geographic area) in which the UE 120 is operating, such as an aviation authority or an aviation administration. To successfully complete the UUAA procedure, the UE 120 may register with both the core network 405 and the source USS 415.

In some aspects, the UE 120 may utilize a network connection provided by the core network 405 to communicate with the source USS 415 to perform a registration procedure with the source USS 415. To establish the network connection, the UE 120 may register with the core network 405. Upon receiving a registration request from a UE 120 and completing the registration, the core network 405 may perform the UUAA procedure in order to provide aerial services to the UE 120.

As shown by reference number 425, the UAS-NF 410 may subscribe to UAS presence monitoring with the core network 405. In some aspects, the UAS-NF 410 may subscribe to the UAS presence monitoring based at least in part on the UAS-NF 410 and/or the UE 120 registering with the core network 405.

In some aspects, the UAS-NF 410 may subscribe to UAS presence monitoring to receive location information associated with the UE 120 upon an occurrence of an event. In some aspects, the event may include the core network 405 receiving location information associated with the UE 120. For example, the UE 120 may periodically provide location information to the core network 405 via the base station 110. The core network 405 may provide the location information to the UAS-NF 410 based at least in part on the UAS-NF 410 subscribing to the UAS presence monitoring.

In some aspects, the event may include the UE 120 leaving the geographic area associated with the source USS 415. For example, the UAS-NF 410 may provide information indicating the geographic area associated with the source USS 415 to the core network 405 (e.g., as part of a process for subscribing to the UAS presence monitoring). The core network 405 may monitor the location information provided by the UE 120 to determine whether the UE 120 is leaving the geographic area associated with the source USS 415. The core network 405 may provide the location information to the UAS-NF 410 when the core network 405 determines that the UE 120 is leaving the geographic area associated with the source USS 415.

As shown by reference number 430, the core network 405 may transmit an event notification to the UAS-NF 410. In some aspects, the event notification may indicate that the UE 120 is leaving the geographic area associated with the source USS 415 or is moving into a geographic area associated with another USS (e.g., the target USS 420). In some aspects, the event notification may include an identifier associated with the UE 120. For example, the event notification may include a GPSI or a civil aviation authority (CAA)-level identifier.

In some aspects, the event notification may include location information associated with the UAS-NF 410. For example, the event notification may include location information indicating a current location of the UE 120, a current trajectory of the UE 120, or a speed of the UE 120, among other examples.

In some aspects, the event notification may include USS information. The USS information may indicate a current USS (e.g., source USS 415) associated with the UE 120. In some aspects, the USS information indicates an address associated with the current USS. For example, the USS information may indicate an IP address or a fully qualified domain name (FQDN) associated with the current USS.

In some aspects, the event notification may include function information. The function information may indicate a function performed by the UE 120 or a type of sensor included on the UE 120.

In some aspects, the event notification may include service information. The service information may indicate a service associated with a function performed by the UE 120 or a service associated with the current USS.

In some aspects, the UAS-NF 410 may determine a USS associated with the UE 120 based at least in part on the event notification. In some aspects, the event notification may include USS information indicating the current USS associated with the UE 120 (e.g., the source USS 415), and the UAS-NF 410 may determine the current USS associated with the UE 120 based at least in part on the USS information. For example, the UAS-NF 410 may determine the current USS associated with the UE 120 based at least in part on an identifier or an address associated with the current USS that is indicated by the USS information.

In some aspects, the event notification includes location information indicating a current location of the UE 120, and the UAS-NF 410 determines the current USS based at least in part on the current location of the UE 120. In some aspects, the UAS-NF 410 may maintain information mapping geographical areas to USSs associated with the geographic areas. The UAS-NF 410 may determine that the UE 120 is located within a particular geographic area based at least in part on the location information. The UAS-NF 410 may determine a USS associated with the particular geographic area based at least in part on the mapping. The UAS-NF 410 may determine that the USS associated with the particular geographic area is the current USS based at least in part on the UE 120 being located within the particular geographic area.

As shown by reference number 435, the UAS-NF 410 may transmit an event notification to the source USS 415 based at least in part on determining that the source USS 415 is the current USS. The event notification may indicate that the UE 120 is leaving the geographic area associated with the source USS 415. In some aspects, the event notification transmitted by the UAS-NF 410 to the source USS 415 may include one or more portions of the event notification received by the UAS-NF 410 from the core network 405. For example, the UAS-NF 410 may forward the event notification received by the UAS-NF 410 from the core network 405 to the source USS 415.

As shown by reference number 440, the source USS 415 may resolve a target USS associated with the UE 120 based at least in part on the event notification. In some aspects, the source USS 415 may resolve the target USS 420 based at least in part on USS/UAS traffic management (UTM) serving information. In some aspects, the USS/UTM serving information may be configured by the UAS-NF 410. In some aspects, the source USS 415 may be pre-configured with the USS/UTM serving information.

The USS/UTM serving information may include information associated with a plurality of USSs (e.g., a plurality of USS devices). For a USS device associated with a USS included in the plurality of USSs, the USS/UTM serving information may indicate an identifier associated with the USS device, an address (e.g., a FQDN or an IP address) associated with the USS device, a domain name system domain name (DNN) associated with the USS device, a single-network slice selection assistance identifier (S-NSSAI) associated with the USS device, and/or a list of service types that can be supported by the USS device, among other examples. In some aspects, for each service type supported by the USS device, the USS/UTM serving information may indicate a type of the service (e.g., a weather service or a mapping service, among other examples), a spatial validity condition (e.g., a geographic area (e.g., indicated by a set of geographic coordinates, a country, or a region), a presence reporting area, or an area of interest in which the service can be supported), and/or a list of UEs 120 associated with an aerial subscription, a CAA-level identifier, or a GPSI.

The source USS 415 may determine a geographic area that the UE 120 is entering and/or a function or a service associated with the UE 120 based at least in part on the event notification. The source USS 415 may determine a USS associated with the geographic area that the UE 120 is entering and/or the function or the service associated with the UE 120 based at least in part on the USS/UTM serving information. The source USS 415 may identify a USS device (e.g., the target USS 420) associated with the identified USS based at least in part on the USS being associated with the geographic area that the UE 120 is entering and/or the function or the service associated with the UE 120.

As shown by reference number 445, the source USS 415 may transmit a notification indicating the target USS 420 to the UAS-NF 410. The UAS-NF 410 may determine that the target USS 420 is being reallocated to the UE 120 based at least in part on the notification. In some aspects, the UAS-NF 410 may transmit an indication of the target USS 420 to the core network 405.

As shown by reference number 450, the source USS 415 and the target USS 420 may perform a context migration process based at least in part on the target USS 420 being the target USS. The context may include information associated with the UE 120. For example, the context may indicate an identifier associated with the UE 120, UUAA information associated with the UE 120, a function performed by the UE 120, a flight plan associated with the UE 120, and/or a current location of the UE 120, among other examples.

The source USS 415 may transmit the context associated with the UE 120 to the target USS 420 to migrate the context to the target USS 420. In some aspects, the source USS 415 may directly transmit the context to the target USS 420. In some aspects, the source USS 415 may indirectly transmit the context to the target USS 420 via the UAS-NF 410.

In some aspects, the target USS 420 may authenticate the UE 120 based at least in part on the UUAA information included in the context. In some aspects, the target USS 420 may reject the UUAA information included in the context and may perform one or more authentication procedures to authenticate the UE 120.

In some aspects, as shown by reference number 455, the target USS 420 may initiate a UUAA-mobility management (MM) mode procedure. The target USS 420 may initiate the UUAA-MM procedure based at least in part on triggering a UUAA re-authorization procedure. For example, the target USS 420 may update the UE 120 with new configuration information (e.g., an identifier and/or an address associated with the target USS 420) via an authorization update provided to the UAS-NF 410. The UAS-NF 410 may receive the authorization update and may provide the new configuration information to the AMF to cause the AMF to trigger a UE configuration update (UCU) process for the UE 120.

In some aspects, as shown by reference number 460, the target USS 420 may initiate a UUAA-session management (SM) mode procedure. The target USS 420 may initiate the UUAA-SM procedure based at least in part on triggering a UUAA re-authorization procedure. For example, the target USS 420 may update the UE 120 with new configuration information (e.g., an identifier and/or an address associated with the target USS 420) via an authorization update provided to the UAS-NF 410. The UAS-NF 410 may receive the authorization update and may provide the new configuration information to the PCF to cause the PCF to trigger a packet data unit (PDU) session establishment/modification process for the UE 120.

As described herein, the source USS 415 and/or the UAS-NF 410 may enable reallocation of the USS (e.g., the target USS 420) serving a UAS during a flight mission. By enabling the reallocation of the USS, the flight of the UAS may be managed by multiple different USSs during a single flight mission, which may enable the UAS to travel across the boundary of two USS geographic areas or dynamically access different USSs for performing functions associated with different types of services.

As indicated above, Fig. 4 is provided as an example. Other examples may differ from what is described with respect to Fig. 4.

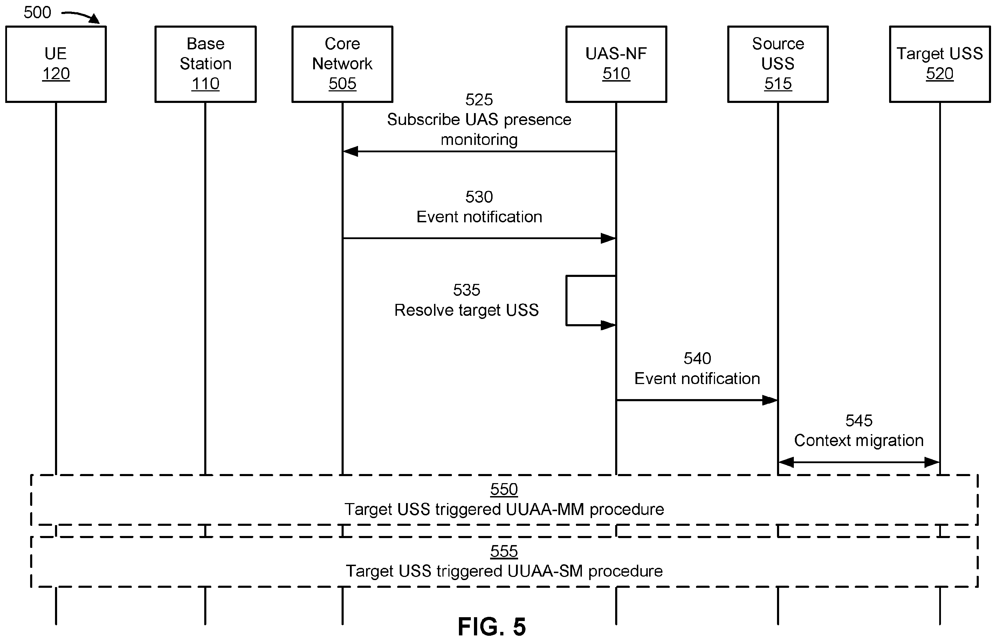

Fig. 5 is a diagram illustrating an example 500 associated with reallocation of a USS serving a UAS during a flight mission, in accordance with the present disclosure. As shown in Fig. 5, example 500 includes communication between a UE 120, a base station 110, a core network 505, a UAS-NF 510, a source USS 515, and a target USS 520. In some aspects, the UE 120, the base station 110, the UAS-NF 510, the source USS 515, and the target USS 520 may be included in one or more wired or wireless networks.

In some aspects, the UE 120 may comprise a UAS. The UE 120 may be operating in a geographic area associated with the source USS 515 and/or performing a function associated with a service associated with the source USS 515. In some aspects, the UE 120 may communicate with the source USS 515 via the base station 110 and/or the core network 505.

The core network 505 may include a network that enables communications between a RAN (e.g., the base station 110) and one or more devices and/or networks connected to the core network 505. In some aspects, the core network 505 may be similar to the core network described elsewhere herein (e.g., core network 405). For example, the core network 505 may include one or more MME/AMFs, one or more NEF/SCEFs, one or more SMFs, one or more PCFs, one or more UDMs, one or more UDRs, and/or other entities and/or functions that provide mobility functions for the UE 120 and enable the UE 120 to communicate with other devices included in the one or more wired or wireless networks associated with the core network 505.

One or more of core network devices may correspond to the network controller 130, as described above in connection with Fig. 1. In some aspects, the source USS 515 may communicate with the core network 505 via the UAS-NF 510. The UAS-NF 510 may enable the source USS 515 to provide information to the core network 505. For example, the source USS 415 may provide, via the UAS-NF 510, registration information associated with a registration between the UE 120 and the source USS 515. The UAS-NF 510 may be external from the core network 505 or may, at least in part, reside at least partially within the core network 505. In some aspects, the UAS-NF 510 may be co-located with the NEF/SCEF.

In some aspects, the UE 120 may be associated with an aerial subscription that is stored and maintained by the core network 505. The aerial subscription may be a subscription for aerial services provided by the core network 505. The core network 505 may assign a network level UAS identifier to an aerial subscription (e.g., using an aviation-level mechanism to ensure global-uniqueness of the network level UAS identifier, such as by including an MCC and/or an MNC in the network level UAS identifier). In some aspects, the network level UAS identifier may be a GPSI. The network level UAS identifier of an aerial subscription (e.g., that is associated with the UE 120) may be communicated to the source USS 515 and/or the UAS-NF 510.

In some aspects, to provide aerial services to the UE 120, the core network 505 may perform a UUAA procedure to authenticate the UE 120. In some aspects, the core network 505 may perform the UUAA procedure in a manner similar to that described elsewhere herein.

In some aspects, the UE 120 may utilize a network connection provided by the core network 505 to communicate with the source USS 515 to perform a registration procedure with the source USS 515. To establish the network connection, the UE 120 may register with the core network 505. Upon receiving a registration request from a UE 120 and completing the registration, the core network 505 may perform the UUAA procedure in order to provide aerial services to the UE 120.

As shown by reference number 525, the UAS-NF 510 may subscribe to UAS presence monitoring with the core network 505. In some aspects, the UAS-NF 510 may subscribe to the UAS presence monitoring based at least in part on the UAS-NF 510 and/or the UE 120 registering with the core network 505.

In some aspects, the UAS-NF 510 may subscribe to UAS presence monitoring to receive location information associated with UE 120 upon an occurrence of an event. In some aspects, the event may include the core network 505 receiving location information associated with the UE 120. For example, the UE 120 may periodically provide location information to the core network 505 via the base station 110. The core network 505 may provide the location information to the UAS-NF 510 based at least in part on the UAS-NF 510 subscribing to the UAS presence monitoring.

In some aspects, the event may include the UE 120 leaving the geographic area associated with the source USS 515. For example, the UAS-NF 510 may provide information indicating the geographic area associated with the source USS 515 to the core network 505 (e.g., as part of a process for subscribing to the UAS presence monitoring). The core network 505 may monitor the location information provided by the UE 120 to determine whether the UE 120 is leaving the geographic area associated with the source USS 515. The core network 505 may provide the location information to the UAS-NF 510 when the core network 505 determines that the UE 120 is leaving the geographic area associated with the source USS 515.

As shown by reference number 530, the core network 505 may transmit an event notification to the UAS-NF 510. In some aspects, the event notification may indicate that the UE 120 is leaving the geographic area associated with the source USS 515 or is moving into a geographic area associated with another USS (e.g., the target USS 520). In some aspects, the event notification may include an identifier associated with the UE 120. For example, the event notification may include a GPSI or a CAA-level identifier.

In some aspects, the event notification may include location information associated with the UAS-NF 510. For example, the event notification may include location information indicating a current location of the UE 120, a current trajectory of the UE 120, or a speed of the UE 120, among other examples.

In some aspects, the event notification may include USS information. The USS information may indicate a current USS (e.g., source USS 515) associated with the UE 120. In some aspects, the USS information indicates an address associated with the current USS. For example, the USS information may indicate an IP address or a FQDN associated with the current USS.

In some aspects, the event notification may include function information. The function information may indicate a function performed by the UE 120 or a type of sensor included on the UE 120.

In some aspects, the event notification may include service information. The service information may indicate a service associated with a function performed by the UE 120 or a service associated with the current USS.

In some aspects, the UAS-NF 510 may determine a USS associated with the UE 120 based at least in part on the event notification. In some aspects, the event notification may include USS information indicating the current USS associated with the UE 120 (e.g., the source USS 515) and the UAS-NF 510 may determine the current USS associated with the UE 120 based at least in part on the USS information. For example, the UAS-NF 510 may determine the current USS associated with the UE 120 based at least in part on an identifier an address associated with the current USS that is indicated by the USS information.

In some aspects, the event notification includes location information indicating a current location of the UE 120 and the UAS-NF 510 may determine the current USS based at least in part on the current location of the UE 120. In some aspects, the UAS-NF 510 may maintain information mapping geographical areas to USSs associated with the geographic areas. The UAS-NF 510 may determine that the UE 120 is located within a particular geographic area based at least in part on the location information. The UAS-NF 510 may determine a USS associated with the particular geographic area based at least in part on the mapping. The UAS-NF 510 may determine that the USS associated with the particular geographic area is the current USS based at least in part on the UE 120 being located within the particular geographic area.

As shown by reference number 535, the UAS-NF 510 may resolve a target USS associated with the UE 120 based at least in part on the event notification. In some aspects, the UAS-NF 510 may resolve the target USS 520 based at least in part on USS/UTM serving information. In some aspects, the UAS-NF 510 may resolve the target USS 520 in a manner similar to that described elsewhere herein.

As shown by reference number 540, the UAS-NF 510 may transmit an event notification to the source USS 515 based at least in part on determining that the source USS 515 is the current USS. The event notification may indicate that the UE 120 is leaving the geographic area associated with the source USS 515 and/or is entering the geographic area associated with the target USS 520. In some aspects, the event notification transmitted by the UAS-NF 510 to the source USS 515 may include one or more portions of the event notification received by the UAS-NF 510 from the core network 505.

In some aspects, the event notification may include information indicating that the source USS 515 is to perform a context migration with the target USS 520 to migrate a context associated with the UE 120 to the target USS 520. For example, the event notification may indicate an identifier or an address associated with the target USS 520 and/or may indicate a current location of the UE 120, that the UE 120 is leaving the geographic area associated with the source USS 515, or that the UE 120 is entering the geographic area associated with the target USS 520.

The source USS 515 may determine that the target USS 520 is being reallocated to the UE 120 based at least in part on the notification. In some aspects, the UAS-NF 510 may transmit an indication of the target USS 520 to the core network 505.

As shown by reference number 545, the source USS 515 and the target USS 520 may perform a context migration process based at least in part on the target USS 520 being the target USS. The context may include information associated with the UE 120. For example, the context may indicate an identifier associated with the UE 120, UUAA information associated with the UE 120, a function performed by the UE 120, a flight plan associated with the UE 120, and/or a current location of the UE 120, among other examples.

The source USS 515 may transmit the context associated with the UE 120 to the target USS 520 to migrate the context to the target USS 520. In some aspects, the source USS 515 may directly transmit the context to the target USS 520. In some aspects, the source USS 515 may indirectly transmit the context to the target USS 520 via the UAS-NF 510.

In some aspects, the target USS 520 may authenticate the UE 120 based at least in part on the UUAA information included in the context. In some aspects, the target USS 520 may reject the UUAA information included in the context and may perform one or more authentication procedures to authenticate the UE 120.

In some aspects, as shown by reference number 550, the target USS 520 may initiate a UUAA-MM mode procedure. The target USS 520 may initiate the UUAA-MM procedure based at least in part on triggering a UUAA re-authorization procedure. For example, the target USS 520 may update the UE 120 with new configuration information (e.g., an identifier and/or an address associated with the target USS 520) via an authorization update provided to the UAS-NF 510. The UAS-NF 510 may receive the authorization update and may provide the new configuration information to the AMF to cause the AMF to trigger a UCU process for the UE 120.

In some aspects, as shown by reference number 555, the target USS 520 may initiate a UUAA-SM mode procedure. The target USS 520 may initiate the UUAA-SM procedure based at least in part on triggering a UUAA re-authorization procedure. For example, the target USS 520 may update the UE 120 with new configuration information (e.g., an identifier and/or an address associated with the target USS 520) via an authorization update provided to the UAS-NF 510. The UAS-NF 510 may receive the authorization update and may provide the new configuration information to the PCF to cause the PCF to trigger a PDU session establishment/modification process for the UE 120.

As described herein, the UAS-NF 510 may enable reallocation of the USS (e.g., the target USS 520) serving a UAS during a flight mission. By enabling the reallocation of the USS, the flight of the UAS may be managed by multiple different USSs during a single flight mission, which may enable the UAS to travel across the boundary of two USS geographic areas or dynamically access different USSs for performing functions associated with different types of services.

As indicated above, Fig. 5 is provided as an example. Other examples may differ from what is described with respect to Fig. 5.

Fig. 6 is a diagram illustrating an example process 600 performed, for example, by a USS, in accordance with the present disclosure. Example process 600 is an example where the USS (e.g., USS 415, 515) performs operations associated with reallocation of a USS during a flight mission of a UAS.

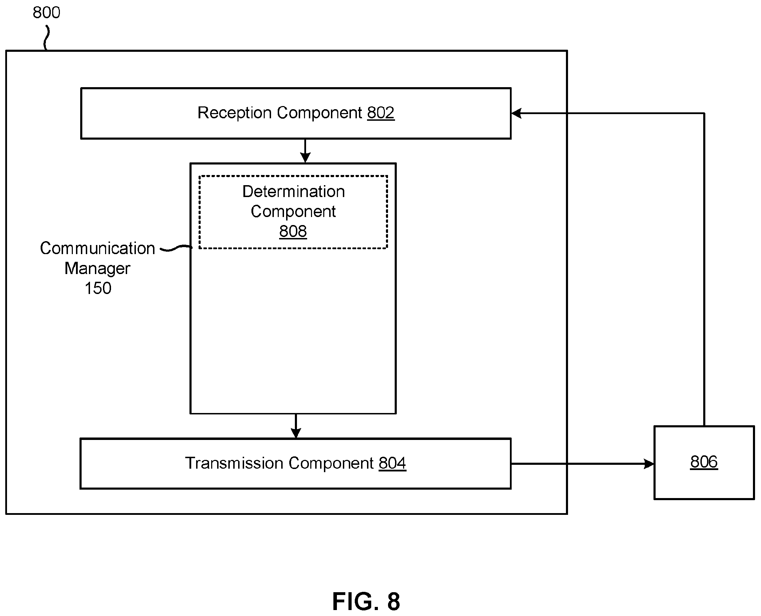

As shown in Fig. 6, process 600 includes receiving a first notification indicating that a UE is moving out of an area associated with the USS (block 610). For example, the USS (e.g., using communication manager 150 and/or reception component 802, depicted in Fig. 8) may receive a first notification indicating that a UE is moving out of an area associated with the USS, as described above.

As further shown in Fig. 6, process 600 includes determining a target USS based at least in part on the first notification (block 620). For example, the USS (e.g., using communication manager 150 and/or determination component 808, depicted in Fig. 8) may determine a target USS based at least in part on the first notification, as described above.

As further shown in Fig. 6, process 600 includes transmitting, to a UAS-NF, a second notification, wherein the second notification indicates that the UE is reallocated to the target USS (block 630). For example, the USS (e.g., using communication manager 150 and/or transmission component 804, depicted in Fig. 8) may transmit, to a UAS-NF, a second notification, wherein the second notification indicates that the UE is reallocated to the target USS, as described above.

Process 600 may include additional aspects, such as any single aspect or any combination of aspects described below and/or in connection with one or more other processes described elsewhere herein.

In a first aspect, the target USS is determined based at least in part on a current location of the UE, and wherein the current location of the UE is indicated in the first notification.

In a second aspect, alone or in combination with the first aspect, a context associated with the UE is provided to the target USS based at least in part on determining the target USS.

In a third aspect, alone or in combination with one or more of the first and second aspects, process 600 includes transmitting a context associated with the UE to the target USS.

In a fourth aspect, alone or in combination with one or more of the first through third aspects, process 600 includes transmitting a context associated with the UE to the UAS-NF, wherein the UAS-NF provides the context to the target USS.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Fig. 7 is a diagram illustrating an example process 700 performed, for example, by a network device, in accordance with the present disclosure. Example process 700 is an example where the network device (e.g., UAS-NF 410, 510) performs operations associated with reallocation of a USS during a flight mission of a UAS.

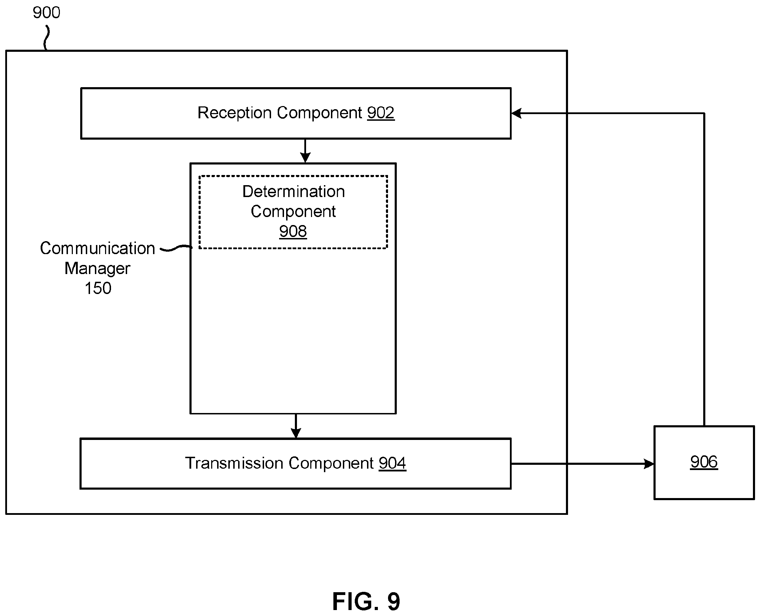

As shown in Fig. 7, in some aspects, process 700 may include determining a target USS based at least in part on information indicating a location of a UE (block 710). For example, the network device (e.g., using communication manager 150 and/or determination component 908, depicted in Fig. 9) may determine a target USS based at least in part on information indicating a location of a UE, as described above.

As further shown in Fig. 7, in some aspects, process 700 may include transmitting, to a current USS associated with the UE, a notification, wherein the notification indicates that a context associated with the UE is to be transferred from the current USS to the target USS (block 720). For example, the network device (e.g., using communication manager 150 and/or transmission component 904, depicted in Fig. 9) may transmit, to a current USS associated with the UE, a notification, wherein the notification indicates that a context associated with the UE is to be transferred from the current USS to the target USS, as described above.

Process 700 may include additional aspects, such as any single aspect or any combination of aspects described below and/or in connection with one or more other processes described elsewhere herein.

In a first aspect, a context associated with the UE is provided to the target USS based at least in part on the current USS receiving the notification.

In a second aspect, alone or in combination with the first aspect, the notification indicates a network address associated with the target USS.

In a third aspect, alone or in combination with one or more of the first and second aspects, process 700 includes receiving, from the current USS, a context associated with the UE based at least in part on the current USS receiving the notification, and transmitting the context to the target USS.

In a fourth aspect, alone or in combination with one or more of the first through third aspects, the target USS is determined based at least in part on the location of the UE and an identifier associated with the UE.

In a fifth aspect, alone or in combination with one or more of the first through fourth aspects, the notification includes a GPSI associated with the UE.

In a sixth aspect, alone or in combination with one or more of the first through fifth aspects, the information indicating the location of the UE is received from a wireless node based at least in part on the network device subscribing to a service associated with receive presence monitoring events associated with the UE from the wireless node, wherein the wireless node is included in a wireless network associated with the network device.

In a seventh aspect, alone or in combination with one or more of the first through sixth aspects, the wireless node includes an AMF or a gateway mobile location center (GMLC).

In an eighth aspect, alone or in combination with one or more of the first through seventh aspects, the network device receives serving information associated with the current USS and the target USS, and wherein the target USS is determined based at least in part on the serving information.

In a ninth aspect, alone or in combination with one or more of the first through eighth aspects, the network device includes a UAS-NF.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram of an example apparatus 800 for wireless communication. The apparatus 800 may be a USS, or a USS may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, or another wireless communication device) using the reception component 802 and the transmission component 804. As further shown, the apparatus 800 may include the communication manager 150. The communication manager 150 may include a determination component 808, among other examples.

In some aspects, the apparatus 800 may be configured to perform one or more operations described herein in connection with Fig. 4. Additionally, or alternatively, the apparatus 800 may be configured to perform one or more processes described herein, such as process 600 of Fig. 6. In some aspects, the apparatus 800 and/or one or more components shown in Fig. 8 may include one or more components of the USS described in connection with Fig. 2. Additionally, or alternatively, one or more components shown in Fig. 8 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 800. In some aspects, the reception component 802 may include one or more antennas, a modem, a demodulator, a MIMO detector, a receive processor, a controller/processor, a memory, or a combination thereof, of the USS described in connection with Fig. 2.

The transmission component 804 may transmit communications, such as reference signals, control information, data communications, or a combination thereof, to the apparatus 806. In some aspects, one or more other components of the apparatus 800 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modem, a modulator, a transmit MIMO processor, a transmit processor, a controller/processor, a memory, or a combination thereof, of the USS described in connection with Fig. 2. In some aspects, the transmission component 804 may be co-located with the reception component 802 in a transceiver.

The reception component 802 may receive a first notification indicating that a UE is moving out of an area associated with the USS. The determination component 808 may determine a target USS based at least in part on the first notification. The transmission component 804 may transmit, to a UAS-NF, a second notification, wherein the second notification indicates that the UE is reallocated to the target USS.

The transmission component 804 may transmit a context associated with the UE to the target USS.

The transmission component 804 may transmit a context associated with the UE to the UAS-NF, wherein the UAS-NF provides the context to the target USS.

The number and arrangement of components shown in Fig. 8 are provided as an example. In practice, there may be additional components, fewer components, different components, or differently arranged components than those shown in Fig. 8. Furthermore, two or more components shown in Fig. 8 may be implemented within a single component, or a single component shown in Fig. 8 may be implemented as multiple, distributed components. Additionally, or alternatively, a set of (one or more) components shown in Fig. 8 may perform one or more functions described as being performed by another set of components shown in Fig. 8.

Fig. 9 is a diagram of an example apparatus 900 for wireless communication. The apparatus 900 may be a UAS-NF, or a UAS-NF may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 150. The communication manager 150 may include a determination component 908, among other examples.

In some aspects, the apparatus 900 may be configured to perform one or more operations described herein in connection with Fig. 5. Additionally, or alternatively, the apparatus 900 may be configured to perform one or more processes described herein, such as process 700 of Fig. 7. In some aspects, the apparatus 900 and/or one or more components shown in Fig. 9 may include one or more components of the UAS-NF described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a modem, a demodulator, a MIMO detector, a receive processor, a controller/processor, a memory, or a combination thereof, of the UAS-NF described in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modem, a modulator, a transmit MIMO processor, a transmit processor, a controller/processor, a memory, or a combination thereof, of the UAS-NF described in connection with Fig. 2. In some aspects, the transmission component 904 may be co-located with the reception component 902 in a transceiver.

The determination component 908 may determine a target USS based at least in part on information indicating a location of a UE. The transmission component 904 may transmit, to a current USS associated with the UE, a notification, wherein the notification indicates that a context associated with the UE is to be transferred from the current USS to the target USS.

The reception component 902 may receive, from the current USS, a context associated with the UE based at least in part on the current USS receiving the notification.

The transmission component 904 may transmit the context to the target USS.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of communication performed by an unmanned aircraft system service supplier, USS, comprising:
receiving (610) a first notification indicating that a user equipment, UE, is moving out of an area associated with the USS;
determining (620) a target USS based at least in part on the first notification; and
transmitting (630), to an unmanned aircraft system network function, UAS-NF, a second notification, wherein the second notification indicates that the UE is reallocated to the target USS.

2. The method of claim 1, wherein the target USS is determined based at least in part on a current location of the UE, and wherein the current location of the UE is indicated in the first notification.

3. The method of claim 1, wherein a context associated with the UE is provided to the target USS based at least in part on determining the target USS.

4. The method of claim 1, further comprising:
transmitting a context associated with the UE to the target USS.

5. The method of claim 1, further comprising:
transmitting a context associated with the UE to the UAS-NF, wherein the UAS-NF provides the context to the target USS.

6. An apparatus for wireless communication, configured to perform the method of any of claims 1 to 5.

## Patentansprüche

1. Ein Verfahren zur Kommunikation, das von einem unbemanntes-Flugzeugsystem-Dienstanbieter, USS, durchgeführt wird, aufweisend:
Empfangen (610) einer ersten Benachrichtigung, die anzeigt, dass sich ein Benutzergerät, UE, aus einem mit dem USS assoziierten Gebiet herausbewegt;
Bestimmen (620) eines Ziel-USS zumindest teilweise basierend auf der ersten Benachrichtigung; und
Übertragen (630) einer zweiten Benachrichtigung an eine unbemanntes-Flugzeugsystem-Netzwerkfunktion, UAS-NF, wobei die zweite Benachrichtigung anzeigt, dass das UE dem Ziel-USS neu zugewiesen ist.

2. Das Verfahren nach Anspruch 1, wobei der Ziel-USS zumindest teilweise basierend auf einem aktuellen Standort des UE bestimmt wird, und wobei der aktuelle Standort des UE in der ersten Benachrichtigung angezeigt wird.

3. Das Verfahren nach Anspruch 1, wobei ein Kontext, der mit dem UE assoziiert ist, dem Ziel-USS bereitgestellt wird basierend zumindest teilweise auf Bestimmen des Ziel-USS.

4. Das Verfahren nach Anspruch 1, weiter aufweisend:
Übertragen eines Kontexts, der mit dem UE assoziiert ist, an den Ziel-USS.

5. Das Verfahren nach Anspruch 1, weiter aufweisend:
Übertragen eines Kontexts, der mit dem UE assoziiert ist, an die UAS-NF, wobei die UAS-NF den Kontext dem Ziel-USS bereitstellt.

6. Eine Vorrichtung zur drahtlosen Kommunikation, die konfiguriert ist, um das Verfahren nach einem der Ansprüche 1 bis 5 durchzuführen.

## Revendications

1. Un procédé de communication réalisé par un fournisseur de services de système d'aéronef sans pilote, USS, comprenant :
la réception (610) d'une première notification indiquant qu'un équipement utilisateur, UE, sort d'une zone associée à l'USS ;
la détermination (620) d'un USS cible sur la base au moins en partie de la première notification ; et
la transmission (630), à une fonction de réseau de système d'aéronef sans pilote, UAS-NF, d'une deuxième notification, dans lequel la deuxième notification indique que l'UE est réaffecté à l'USS cible.

2. Le procédé selon la revendication 1, dans lequel l'USS cible est déterminé au moins en partie sur la base d'un emplacement courant de l'UE, et dans lequel l'emplacement courant de l'UE est indiqué dans la première notification.

3. Le procédé selon la revendication 1, dans lequel un contexte associé à l'UE est délivré à l'USS cible sur la base au moins en partie de la détermination de l'USS cible.

4. Le procédé selon la revendication 1, comprenant en outre :
la transmission à l'USS cible d'un contexte associé à l'UE.

5. Le procédé selon la revendication 1, comprenant en outre :
la transmission à l'UAS-NF d'un contexte associé à l'UE, dans lequel l'UAS-NF délivre le contexte à l'USS cible.

6. Un appareil pour la communication sans fil, configuré pour réaliser le procédé selon l'une des revendications 1 à 5.
